# EUROPÄISCHE PATENTSCHRIFT

(11) **EP 2 476 551 B1**
(45) Veröffentlichungstag und Bekanntmachung des Hinweises auf die Patenterteilung: **02.01.2019**
(21) Anmeldenummer: 12151329.5
(22) Anmeldetag: 16.01.2012
(51) Int. Cl.: B32B 27/10, B65D 65/42

(54) **Verpackung aus Karton**
Packaging made from cardboard
Emballage en carton

(30) Priorität: 17.01.2011 DE 102011000189
(43) Veröffentlichungstag der Anmeldung: 18.07.2012
(73) Patentinhaber: VG Nicolaus GmbH & Co KG, 87437 Kempten (DE)
(72) Erfinder: Avemarg, Michael, 87439 Kempten (DE)
(74) Vertreter: Hutzelmann, Gerhard

(56) Entgegenhaltungen:
- EP-A1- 0 761 876
- WO-A1-01/76976
- WO-A1-97/33044
- WO-A1-98/54410
- DE-A1- 4 130 905
- US-A- 3 081 213
- ANTJE VOLLMER ET AL: "Migration of mineral oil from printed paperboard into dry foods: survey of the German market", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 232, no. 1, 19 October 2010 (2010-10-19), pages 175-182, XP019855854, ISSN: 1438-2385, DOI: 10.1007/S00217-010-1376-6

## Beschreibung

Die Erfindung bezieht sich auf eine Verpackung aus Karton, insbesondere für Lebensmittel mit wenigstens einer Kartonlage aus Recyclingkarton sowie auf die Verwendung einer Verpackung aus Recyclingkarton für Lebensmittel.

Bei Recyclingkarton lässt sich nicht ausschließen, dass niedermolekulare Stoffe, insbesondere Mineralöle oder deren Bestandteile, Phenole und dergleichen enthalten sind, die dann bei Verwendung dieses Kartons in das Füllgut migrieren und dieses kontaminieren.

Aus der WO 97/33044 ist beispielsweise ein Karton bekannt, der mit einer Cyclodextrin enthaltenden Barriereschicht versehen ist.

Der Erfindung liegt die Aufgabe zugrunde, den Recyclingkarton so zu behandeln, dass dies verhindert wird und Recyclingkarton für viele auch empfindliche Füllgüter als Verpackungsmaterial einsetzbar wird.

Diese Aufgabe wird erfindungsgemäß dadurch gelöst, dass der Recyclingkarton auf seiner dem verpackten Material zugekehrten Seite mit einer Sperrschicht gegen niedermolekurlare Stoffe, das heisst Mineralöle oder deren Bestandteile und/oder Phenole abgedeckt ist, wobei der Recyclingkarton wenigstens auf seiner dem verpackten Material zugekehrten Seite eine Beschichtung aus Kunststoff aufweist, die als Extrusionsbeschichtung ausgeführt sein kann oder wobei der Recyclingkarton wenigstens auf seiner dem verpackten Material zugekehrten Seite mit einer Folienkaschierung versehen ist und dass die Beschichtung aus Polyamid und/oder Polyethylen besteht oder dass die Folienkaschierung aus einer PA und PE Verbund-Folie besteht.

Dadurch kommt das Füllgut nicht direkt mit dem Recyclingkarton in Kontakt so dass ein gegenseitiger Austausch zwischen den Kartonbestandteilen und den Füllgutbestandteilen verhindert wird.

Eine Kontaminierung des Füllgutes mit schädlichen Inhaltsstoffen des Recyclingkartons wird somit unterbunden, was insbesondere für die Verpackung von Lebensmitteln unverzichtbar ist.

Diese Kunststoff-Beschichtung stellt eine sehr wirksame Barriere gegen alle eventuell im Recyclingkarton enthaltenen Schadstoffe dar. Im Extrusionsbeschichtungsverfahren lässt sich diese Beschichtung auf einfache Art und Weise rationell herstellen. Es sind aber auch Dispersionsbeschichtungen, Imprägnierungen oder dergleichen denkbar.

Diese Kunststoffe haben sich insbesondere als Barriereschicht gegen niedermolekulare Stoffe, insbeondere gegen Mineralöle, Phenole und deren Bestandteile besonders bewährt.

Ebenfalls sehr vorteilhaft kann es dabei sein, wenn gemäß einer Weiterbildung der Erfindung die Beschichtung mehrlagig ausgebildet ist.

Durch diese mehrlagige Ausgestaltung kann die Barrierewirkung insbesondere auf die Erfordernisse des Füllgutes abgestellt werden.

Bei einer Folienkaschierung kann die Folie bei ihrer Herstellung optimal auf die vorgesehenen Barriereerfordernisse eingestellt werden.
PET hat sich als sehr guter Barrierestoff gegenüber Mineralölen und deren Bestandteile herausgestellt.
Hiermit lassen sich die Barriereeigenschaften optimal einstellen.

Erfindungsgemäß ist es auch möglich, daß die Folienkaschierung mehrlagig ausgebildet ist.

Dadurch kann ein weiter Bereich an Barriereeigenschaften durch unterschiedliche Schichtabfolgen erzielt werden.

Eine weitere vorteilhafte Ausgestaltung der Erfindung liegt darin, daß zwischen Recyclingkarton und Abdeckung und/oder zwischen den einzelnen Schichten der Abdeckung ein Haftvermittler, eine Klebstoffschicht und/oder eine niedrig schmelzende Schicht vorgesehen ist.

Damit wird vor allem die Verbindung zwischen Recyclingkarton und Abdeckung wirksam verbessert. Insbesondere eine niedrig schmelzende Schicht sorgt dafür, daß bereits durch die Prozesswärme eine sehr gute Verbindung zwischen dem Karton und der Abdeckung entsteht.

Dabei hat es sich auch als sehr vorteilhaft erwiesen, wenn der Haftvermittler in zumindest eine Kunststoffschicht eingemischt ist.

Hierdurch wird ein sehr guter Zusammenhalt zwischen dem Recyclingkarton und der Abdeckung geschaffen, wobei auch die Verträglichkeit zu einer weiteren Abdecklage verbessert wird.

Ebenfalls sehr vorteilhaft ist eine weitere Ausgestaltung der Erfindung, gemäß welcher eine Mischbeschichtung mit polarer und/oder unpolarer Barriere für den Recyclingkarton vorgesehen ist.

Eine solche Mischbeschichtung kann optimal auf die im Recyclingkarton vorhandenen Mineralölbestandteile eingestellt werden. Zusätzlich bestehen dann auch Barriereeigenschaften gegenüber polaren Substanzen, wie zum Beispiel Wasser / Wasserdampf.

Als sehr vorteilhaft hat es sich dabei ergeben, wenn die Mischbeschichtung als ein- oder mehrlagige Abdeckung ausgebildet ist, wobei auch mehrere Materialien in einer einzigen Schicht vorgesehen sein können.

Auch durch Mischmaterialien werden bestimmte Barriereeigenschaften betont und kombiniert.

Eine weitere vorteilhafte Ausgestaltung der Erfindung ist dadurch gekennzeichnet, dass wenigstens die im Inneren der Verpackung liegenden Schnittkanten des Recyclingkartons abgedeckt sind, wobei die Abdeckung durch Abdeckmaterial, einen Lackauftrag, eine Umfalzung oder dergleichen erfolgt sein kann, das auf den Karton aufkaschiert oder beschichtet ist.

Damit sind nicht nur die dem Füllgut zugekehrten Flächen, sondern auch die im Inneren der Verpackung liegenden Schnittkanten abgedeckt. Eine Kontamination des Füllgutes ist ausgeschlossen.

Dabei kann erfindungsgemäß vorgesehen sein, dass die Abdeckung um die Kanten bis auf die gegenüberliegende Seite herumgezogen ist, oder auf den nebenliegenden Kartonabschnitt übersteht.

Damit ist eine sehr wirksame Abdeckung der Schnittkanten erreicht.

Eine vorteilhafte Verwendung einer Verpackung aus Recyclingkarton für Lebensmittel ist dadurch erreicht, daß ein direkter Kontakt zwischen Füllgut und Recyclingkarton durch eine Abdeckung verhindert wird.

Eine weitere vorteilhafte Verwendung liegt erfindungsgemäß darin, daß als Abdeckung eine aus lebensmittelgeeigneten Materialien hergestellte Schicht wenigstens auf der zum Füllgut weisenden Seite der zu bildenden Verpackung vorgesehen ist und zum Füllgut weisende offene Schnittkanten ebenfalls abgedeckt sind.

Ebenfalls sehr vorteilhaft ist eine erfindungsgemäße Verwendung bei welcher der Karton im Bereich seiner Kanten verdünnt ausgebildet ist.

Dadurch werden beim Umschlagen der Schnittkanten-Abschnitte Materialverdoppelungen vermieden.

In der Zeichnung sind mehrere Ausführungsbeispiele der Erfindung veranschaulicht. Dabei zeigen:
- Fig.1: eine Schnittdarstellung eines Recyclingkartons mit einer Extrusionsbeschichtung mit PA und PE,
- Fig.2: eine Extrusionsbeschichtung mit einem Haftvermittler,
- Fig.3: eine Schnittdarstellung eines Recyclingkartons mit einer Kaschierung einer PET-bzw. einer OPP-Folie,
- Fig.4: eine Kaschierung einer PE/PA Verbundfolie und
- Fig.5: eine Schnittdarstellung eines Recyclingkartons mit einer Mischbeschichtung

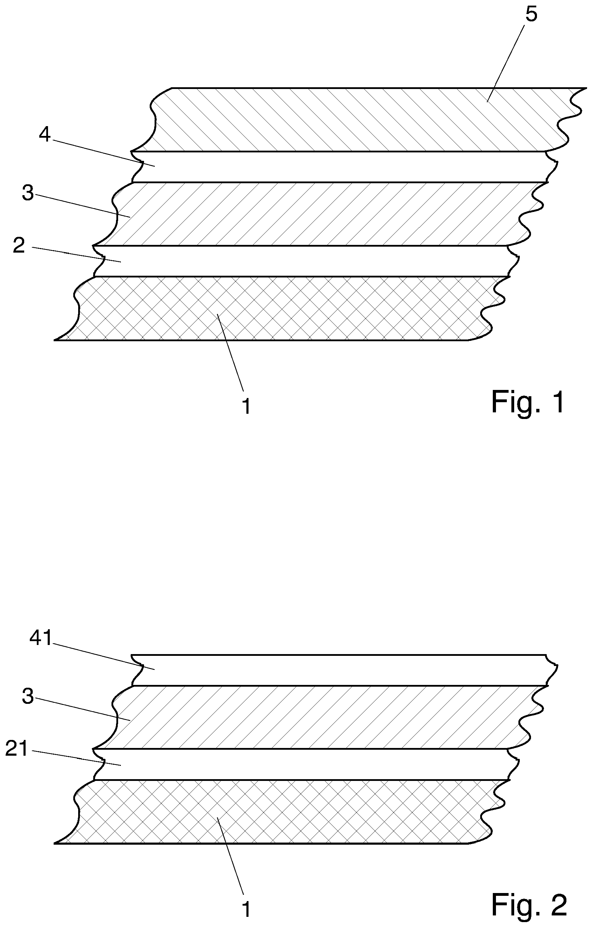

Mit 1 ist in den Figuren eine Lage aus Recyclingkarton bezeichnet. In Fig.1 ist auf die Kartonlage 1 ein Haftvermittler 2 aufgebracht, mit dem eine PA-Schicht 3 an der Kartonlage befestigt ist. An der von der Kartonlage 1 abgewandten Seite der PA-Schicht 3 ist ein weiterer Haftvermittler 4 vorgesehen, mit dem eine PE-Schicht 5 festgelegt ist.

Die PE-Schicht 5 dient dabei vorwiegend als Siegelschicht, während die PA-Schicht 5 ein Austreten von niedermolekularen Stoffen aus der Recyclingkarton-Lage 1 in Richtung auf das Füllgut verhindert. Es ist dabei denkbar, daß der Haftvermittler in die PE-Schicht 5 eingemischt ist und so die modifizierte PE-Schicht 5 direkt als Haftvermittler und Siegelschicht dient.

Nicht erfindungsgemäß ist beim Ausfiihrungsbeispiel nach Fig.2 die PA-Schicht 3 beiderseits mit einem Haftvermittler 21 bzw. 41 versehen, von denen wenigstens einer auf Basis LLDPE hergestellt ist und als Adhesionsoptimierer dient. Auch hierbei stellt die PA-Schicht wieder die Barriere für Mineralöle dar.

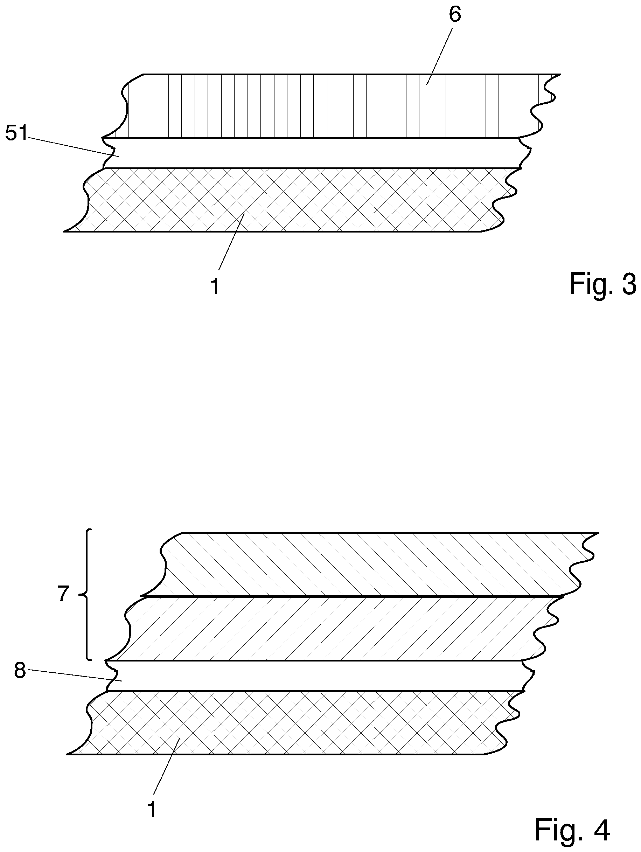

Nicht erfindungsgemäß ist die Ausführung gemäß Fig.3. Hierbei ist auf die Recyclingkarton-Lage 1 eine PET-Folie 6 unter Zwischenlage einer LDPE-Schicht 51 aufkaschiert.
Es hat sich gezeigt, dass eine PET-Folie eine sehr wirkungsvolle Barriere gegen Mineralöle und deren Bestandteile darstellt.
Anstelle der PET-Folie oder auch zusätzlich zu dieser kann eine OPP-Folie vorgesehen werden.
Wie Fig.4 zeigt, kann auch eine PE/PA-Verbundfolie 7 auf eine Recyclingkarton-Lage 1 aufkaschiert werden, Dabei ist die PA-Schicht dem Karton zugekehrt und zwischen beiden ist ein Haftvermittler 8, vorzugsweise auf PE-Basis, vorgesehen.

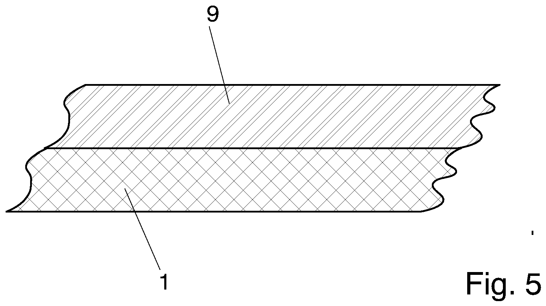

Eine weitere Möglichkeit der Abdeckung der Recyclingkarton-Lage besteht gemäß Fig.5 darin, dass diese mit einer Mischbeschichtung 9 versehen wird, die aus einem polaren Polymermix besteht.

Kaschierungen bzw. Beschichtungen mit weiteren Kunststoffen bzw. KunststoffGemischen sind denkbar. Wichtig dabei ist, dass eine wirksame Barriere gegen Mineralöle bzw. deren Bestandteile erzielt wird.

Zwischen den einzelnen Schichten der Kaschierung bzw. Beschichtung können ebenfalls Haftvermittlerschichten vorgesehen sein, die eine entsprechende Kompatibilität zwischen den einzelnen Lagen herstellen.

Die ins Innere der zu bildenden Verpackung gerichteten Schnittkanten werden vorzugsweise ebenfalls abgedeckt, wobei entweder die Beschichtung bzw. Kaschierung über die Schnittkante gezogen wird oder diese so umgelegt wird, dass die Schnittkante zwischen zwei Lagen zu liegen kommt.
Dabei ist es möglich, die Kartonlage zu verdünnen, damit keine Materialanhäufung auftritt.

## Patentansprüche

1. Verpackung aus Karton, insbesondere für Lebensmittel mit wenigstens einer Kartonlage aus Recyclingkarton(1), **dadurch gekennzeichnet, dass** der Recyclingkarton(1) auf seiner dem verpackten Material zugekehrten Seite mit einer Sperrschicht gegen niedermolekulare Stoffe, das heisst Mineralöle oder deren Bestandteile und/oder Phenole abgedeckt ist, wobei der Recyclingkarton(1) wenigstens auf seiner dem verpackten Material zugekehrten Seite eine Beschichtung(3) aus Kunststoff aufweist, die als Extrusionsbeschichtung ausgeführt sein kann oder wobei der Recyclingkarton(1) wenigstens auf seiner dem verpackten Material zugekehrten Seite mit einer Folienkaschierung(6,7) versehen ist und dass die Beschichtung(3) aus Polyamid und/oder Polyethylen besteht oder dass die Folienkaschierung(6) aus einer PA und PE Verbund-Folie besteht.

2. Verpackung nach Anspruch 1, **dadurch gekennzeichnet, daß** die Beschichtung(2,3,4,5) oder die Folienkaschierung(6,7) mehrlagig ausgebildet ist.

3. Verpackung nach einem der vorangehenden Ansprüche, **dadurch gekennzeichnet, daß** zwischen Recyclingkarton(1) und Abdeckung und/oder zwischen den einzelnen Schichten der Abdeckung ein Haftvermittler, eine Klebstoffschicht und/oder eine niedrig schmelzende Schicht vorgesehen ist.

4. Verpackung nach Anspruch 3, **dadurch gekennzeichnet, daß** der Haftvermittler in zumindest eine Kunststoffschicht eingemischt ist.

5. Verpackung nach einem der vorhergehenden Ansprüche, **dadurch gekennzeichnet, dass** eine Mischbeschichtung(9) für den Recyclingkarton(1) vorgesehen ist, wobei polare und/oder unpolare Bestandteile vorgesehen sein können.

6. Verpackung nach Anspruch 5, **dadurch gekennzeichnet, daß** die Mischbeschichtung(9) als ein- oder mehrlagige Abdeckung ausgebildet ist, wobei auch mehrere Materialien in einer einzigen Schicht vorgesehen sein können.

7. Verpackung nach einem der vorhergehenden Ansprüche, **dadurch gekennzeichnet**, das wenigstens die im Inneren der Verpackung liegenden Schnittkanten des Recyclingkartons(1) abgedeckt sind, wobei die Abdeckung durch Abdeckmaterial, einen Lackauftrag, eine Umfalzung oder dergleichen erfolgt sein kann, das auf den Karton aufkaschiert oder beschichtet ist.

8. Verpackung nach Anspruch 7, **dadurch gekennzeichnet, daß** die Abdeckung um die Kanten bis auf die gegenüberliegende Seite herumgezogen ist, oder auf den nebenliegenden Kartonabschnitt übersteht.

9. Verwendung einer Verpackung aus Recyclingkarton für Lebensmittel gemäß einem der vorangehenden Ansprüche, **dadurch gekennzeichnet, daß** ein direkter Kontakt zwischen Füllgut und Recyclingkarton(1) durch eine Abdeckung verhindert wird, um die Migration niedermolekulare Stoffe, nämlich Mineralöle oder deren Bestandteile, Phenole aus dem Recyclingkarton (1) in das Füllgut hinein zu unterbinden.

10. Verwendung nach Anspruch 9, **dadurch gekennzeichnet, daß** als Abdeckung eine aus lebensmittelgeeigneten Materialien hergestellte Schicht wenigstens auf der zum Füllgut weisenden Seite der zu bildenden Verpackung vorgesehen ist und zum Füllgut weisende offene Schnittkanten ebenfalls abgedeckt sind.

11. Verwendung nach Anspruch 9 oder 10, **dadurch gekennzeichnet, daß** der Karton(1) im Bereich seiner Kanten verdünnt ausgebildet ist.

## Claims

1. Packaging of cardboard, particularly for foodstuffs, with a least one cardboard layer of recycled cardboard (1), **characterised in that** the recycled cardboard (1) on its side facing the packaged material is covered with a blocking layer relative to low-molecular substances, i.e. mineral oils or constituents thereof and/or phenols, wherein the recycled cardboard (1) has at least on its side facing the packaged material a coating (3) of plastics material which can be realised as an extrusion coating or wherein the recycling cardboard (1) is provided at least on its side facing the packaged material with a film lamination (6, 7) and that the coating (3) consists of polyamide and/or polyethylene or that the film lamination (6) consists of a PA and PE composite film.

2. Packaging according to claim 1, **characterised in that** the coating (2, 3, 4, 5) or the film lamination (6, 7) is formed to be multi-layer.

3. Packaging according to one of the preceding claims, **characterised in that** an adhesion agent, an adhesive layer and/or a layer with low melting point is or are provided between recycled cardboard (1) and covering and/or between the individual layers of the covering.

4. Packaging according to claim 3, **characterised in that** the adhesion agent is mixed into at least one plastics material layer.

5. Packaging according to any one of the preceding claims, **characterised in that** a mixed coating (9) is provided for the recycled cardboard, wherein polar and/or non-polar components can be provided.

6. Packaging according to claim 5, **characterised in that** the mixed coating (9) is formed as a single-layer or multi-layer covering, wherein in addition several materials can be provided in a single layer.

7. Packaging according to any one of the preceding claims, **characterised in that** at least the cut edges, which lie in the interior of the packaging, of the recycled cardboard (1) are covered, wherein the covering can be realised by covering material, a lacquer coating, folding over or the like, which is laminated or coated on the cardboard.

8. Packaging according to claim 7, **characterised in that** the covering is drawn around the edges to the opposite side or projects over the adjacent cardboard section.

9. Use of packaging of recycled cardboard for foodstuffs according to any one of the preceding claims, **characterised in that** direct contact between filling and recycled cardboard (1) is prevented by a covering so as to preclude migration of low-molecular substances, namely mineral oils or constituents thereof or phenols from the recycled cardboard (1) into the filling.

10. Use according to claim 9, **characterised in that** a layer produced from foodstuffs-compatible materials is provided as covering at least on the side, which faces the filling, of the packaging to be formed and open cut edges facing the filling are similarly covered.

11. Use according to claim 9 or 10, **characterised in that** the cardboard (1) is thinned in the region of its edges.

## Revendications

1. Emballage en carton notamment destiné à des aliments, muni d'au moins une couche de carton recyclé (1) et **caractérisé par le fait que** le carton recyclé (1) est recouvert, sur sa face tournée vers la matière emballée, d'une couche formant barrière à l'encontre de substances à faible poids moléculaire, c'est-à-dire d'huiles minérales ou de composants de ces dernières, et/ou de phénols, sachant que ledit carton recyclé (1) est pourvu, au moins sur sa face tournée vers ladite matière emballée, d'un revêtement (3) en matière plastique pouvant être réalisé sous la forme d'un revêtement extrudé, ou bien que ledit carton recyclé (1) est doté d'une stratification de films (6, 7), au moins sur sa face tournée vers ladite matière emballée ; et **par le fait que** ledit revêtement (3) est constitué de polyamide et/ou de polyéthylène, ou que ladite stratification de films (6) est constituée d'un film composite en PA et PE.

2. Emballage selon la revendication 1, **caractérisé par le fait que** le revêtement (2, 3, 4, 5) ou la stratification de films (6, 7) est réalisé(e) en plusieurs couches.

3. Emballage selon l'une des revendications précédentes, **caractérisé par le fait qu'**un agent d'adhérence, une couche d'adhésif et/ou une couche à bas point de fusion, est (sont) prévu(e)(s) entre le carton recyclé (1) et le recouvrement, et/ou entre les couches individuelles dudit recouvrement.

4. Emballage selon la revendication 3, **caractérisé par le fait que** l'agent d'adhérence est intégré dans au moins une couche de matière plastique.

5. Emballage selon l'une des revendications précédentes, **caractérisé par le fait qu'**un revêtement mixte (9) est prévu pour le carton recyclé (1), des composants polaires et/ou non polaires pouvant être prévus.

6. Emballage selon la revendication 5, **caractérisé par le fait que** le revêtement mixte (9) est réalisé sous la forme d'un recouvrement à une ou plusieurs couche(s), plusieurs matériaux pouvant également être prévus dans une couche unique.

7. Emballage selon l'une des revendications précédentes, **caractérisé par le fait qu'**au moins les arêtes de coupe du carton recyclé (1), situées dans l'espace interne dudit emballage, sont munies d'un recouvrement, lequel recouvrement peut se présenter comme un matériau couvrant, un dépôt de laque, une zone repliée, ou un moyen similaire stratifié ou appliqué sur ledit carton.

8. Emballage selon la revendication 7, **caractérisé par le fait que** le revêtement est rabattu autour des arêtes, jusque sur la face opposée, ou bien fait saillie au-delà de la région du carton occupant une position latéralement adjacente.

9. Utilisation d'un emballage en carton recyclé conforme à l'une des revendications précédentes, destiné à des aliments, **caractérisée par le fait qu'**un contact direct, entre la matière d'emplissage et le carton recyclé (1), est empêché par un recouvrement visant à interdire la migration de substances à faible poids moléculaire, c'est-à-dire d'huiles minérales ou de composants de ces dernières, de phénols, dans ladite la matière d'emplissage à partir dudit carton recyclé (1).

10. Utilisation selon la revendication 9, **caractérisée par le fait qu'**une couche fabriquée en des matériaux à compatibilité alimentaire est prévue, en tant que recouvrement, au moins sur la face de l'emballage à constituer qui est orientée vers la matière d'emplissage, et des arêtes de coupe ouvertes, pointant vers ladite matière d'emplissage, sont recouvertes pareillement.

11. Utilisation selon la revendication 9 ou 10, **caractérisée par le fait que** le carton (1) est de réalisation amincie dans la région de ses arêtes.
